# EUROPÄISCHE PATENTANMELDUNG

(11) **EP 1 191 725 A2**
(43) Veröffentlichungstag der Anmeldung: **27.03.2002**
(21) Anmeldenummer: 01440296.0
(22) Anmeldetag: 12.09.2001
(51) Int. Cl.: H04J 3/16

(54) **Transportmodul für SDH/SONET**

(30) Priorität: 26.09.2000 DE 10047510
(71) Anmelder: ALCATEL, 75008 Paris (FR)
(72) Erfinder: Heuer, Volkmar, 71254 Ditzingen (DE)
(74) Vertreter: Menzietti, Domenico, Dipl.-Ing

(57) **Zusammenfassung**

Es wird ein Verfahren zum Übertragen von virtuellen Containern von SDH-oder SONET-Signalen vorgeschlagen, bei dem eine Gruppe von AU-3 oder AU-4 oder AU-3-Nc oder AU-4-4c in einem neuartigen VC-Y-Xc Transportmodul mit einem AU-PTR und einem AU-POH für die Gruppe übertragen wird. Das VC-Y-Xc Transportmodul für SDH oder SONET dient zur Bildung einer Gruppe von virtuellen Containern und hat einen PTR für die Gruppe, einen POH für die Gruppe und maximal X-1 virtuellen Container Plätzen zum Übertragen von Nutzinformationen, wobei X eine natürliche Zahl größer 1 ist und Y gleich 3 oder 4 oder eine natürliche Zahl grösser 1 ist.. Für Übertragungskanäle höherer Ordnung, z.B. VC-4 oder VC-3 oder auch VC-4-Nc oder VC-3-3Nc, wird eine Kanalbündelung durchgeführt, wenn diese Kanäle zumindest auf einem Teilabschnitt gemeinsam transportiert werden. Das Netzwerkmanagement hat nur noch das eine Bündel zu managen, zu schützen und zu schalten anstelle einer Vielzahl von einzelnen Kanälen.

## Beschreibung

Die Erfindung betrifft ein Transportmodul für SDH/SONET.

In SDH-Netzen und SONET-Netzen korreliert der Umfang der Netzwerkmanagement Aufgaben mit der Anzahl der gleichzeitig übertragenen Kanäle; SDH=Synchrone Digitale Hierarchie, SONET=Synchronous Optical Network. Je mehr Kanäle übertragen werden, desto mehr Aufgaben müssen durchgeführt werden. Zu den Aufgaben zählen beispielsweise Konfiguration, Administration, Wartung, Überwachung. Auf Grund des stetig steigenden Bedarfs an Datenübertragung erhöht sich die zur Verfügung zu stellende Anzahl von Übertragungskanälen im Backbone-Netz kontinuierlich. Dies wiederum führt zu einem erhöhten Bedarf an sogenanntem Line Equipment und Netzwerkmanagement. Zum Line Equipment zählen beispielsweise ADMs und CCs, ADM=Add Drop Multiplexer, CC=Cross-Connect. In einem ADM wird beispielsweise ein STM-16 Transportmodul empfangen, das mehrere VC-4 Container beinhaltet. Der ADM hat nun die Aufgabe herauszufinden, welcher Container nur weitergeleitet werden soll und welcher Container aus dem STM-16 entfernt werden soll, sogenanntes dropping. Der ADM muss den POH und Pointer jedes VC-4 Containers separat auswerten und abhängig von der Auswertung jeden Container einzeln weiterleiten oder droppen. Es werden Alarme ausgewertet, automatische Folgeaktionen gestartet und die Signalqualität überwacht. Dies erfordert einen gewissen zeitlichen Aufwand, der zu Lasten der Übertragungszeit geht und zu komplexen Hardware- und Software- Implementierungen der Netzelemente führt. Zudem wird das Netzwerkmanagement durch die hohe Anzahl der Übertragungskanäle stark beansprucht.

Die herkömmlichen standardisierten Methoden der Kanalbündelung genannt TCM (Tandem Connection Monitoring gemäß ITU-T G.707 Option 1, Edition 3/1996) haben den Nachteil das Netzelemente, die das Bündel transportieren und auswerten diese komplexen TCM Funktionen unterstützen müssen, was zu einem erheblichen Mehraufwand beim Betreiben führt. In vorhandene Netze kann TCM praktisch nicht nachgerüstet werden, womit auch keine Bündel gemanagt werden können.

Aufgabe der Erfindung ist es, die Übertragung von Übertragungskanälen und deren Steuerung durch ein SDH- oder SONET-Netz zu vereinfachen.

Gelöst wird diese Aufgabe durch ein Transportmodul nach Anspruch 1.

Für Übertragungskanäle höherer Ordnung, z.B. AU-4 oder AU-3, wird eine Kanalbündelung durchgeführt, wenn diese Kanäle für zumindest einen Abschnitt den gleichen Wegverlauf haben. Das Netzwerkmanagement hat für diesen Abschnitt nur noch das eine Bündel zu managen anstelle einer Vielzahl von einzelnen Kanälen. Da die Nutzkanäle des Bündels transparent transportiert werden sind beliebige Kombinationen von Nutzkanälen denkbar. Jeder einzelne Nutzkanal wie z.B. VC-4 oder VC-3 kann wiederum beliebig strukturiert sein. D.h. ein VC-4 könnte z.B. 21 VC-12 und 2 VC-3 virtuelle Kanäle transportieren. Es ist jedoch auch möglich, den VC-4 unstrukturiert mit ATM-, IP- oder Ethernet Nutzlast zu füllen.

Falls die Quell- und Zieladresse der Nutzkanäle des Bündels identisch sind, kann das Pointerprocessing dieser Schaltungsebene vereinfacht werden und die Bandbreitennutzung verbessert werden. Werden z.B. in einem SDH-Netz zwei digitale Cross-Connects (DXC) mit der Schaltungsebene VC-12 über ein Bündel von

VC-4-4c verbunden, das als Nutzkanäle TU-12 Kanäle transportiert, dann wird sich der AU-4-PTR systembedingt niemals ändern. Es ist in solchen Fällen möglich, auf das Pointerprocessing auf der VC-4 Schaltungsebene zu verzichten. In solchen Fällen bringt es auch keinen zusätzlichen Nutzen, wenn die einzelnen VC-4 POH ausgewertet bzw. übertragen werden, da der VC-4-4c POH des Bündels bereits ausgewertet wird. Es ist daher vorteilhaft, in solchen Fällen die TU-12 direkt in die Nutzlast des VC-4-4c zu packen. D.h. es wird kein zugehöriger VC-4 POH, AU-4 Pointer übertragen. Anstatt 3*63=189 können dann 4*63=252 TU-12 transparent transportiert werden. Entsprechendes gilt für größere Bündel VC-4-Nc mit N=16, 64, 256. Bei SONET Netzen gilt entsprechendes falls die VC-3 Kanäle die gleichen Quell- und Zieladressen haben.

Es stehen eine Vielzahl von Möglichkeiten der Bündelung zur Verfügung. 15 AU-4 Kanäle können z.B. in ein VC-4-16c Transportmodul gemapped werden. Beim VC-4-16c handelt es sich um ein Bündel von 16 VC-4. Das c steht für die sogenannte contiguous concatenation, also die Bündelung oder Gruppenbildung. Der erste VC-4 wird u.a. für den POH der Gruppe verwendet. In den nachfolgenden 15 C-4 oder VC-4 werden u.a. die zu übertragenden Nutzinformationen übertragen. Bei den zu transportierenden Nutzkanälen kann es sich um miteinander verkettete AU-4 oder AU-3 handeln, sogenanntes virtual oder contiguous concatenation, oder um voneinander unabhängige AU-4 oder AU-3. Ferner können 63 AU-4 Kanäle in ein VC-4-64c Transportmodul gemapped werden. Verallgemeinert können beispielsweise N-1 AU-4 Kanäle in einen VC-4-Nc gemapped werden, wobei N=4, 16, 64, 128, usw. sein kann. Ferner können beispielsweise 3xN-1 AU-3 Kanäle in ein VC-4-Nc bzw. in eine VC-3-3Nc gemapped werden, mit N=4, 16, 64, 256, usw. Die Zahl N ist in den vorgenannten Beispielen stets eine Zweierpotenz; N kann theoretisch aber jede natürliche Zahl größer 1 sein. Die Erfindung ist ferner nicht auf VC-4 beschränkt, sondern kann beispielsweise auch bei VC-3 von SONET oder allgemein bei VC-M angewendet werden, mit M gleich eine natürlich Zahl größer gleich 2.

Vorteilhafterweise verwendet man beim Mapping der einzelnen Kanäle in den fest verkettete VC-4-Nc virtuellen Containern eine byteoriente Struktur, die möglichst wenig Mapping-Änderungen zum herkömmlichen Mappingverfahren von (N-1) x AU-4 in die zugehörigen AUG aufweist. Entsprechendes gilt für ein vorteilhaftes Mapping von AU-3 Kanälen in VC-3-3Nc. Dieses Mappingverfahren wird fortan äquivalentes Mapping genannt.

Z.B. wird ein VC-4-4c so strukturiert, dass beim Mapping der z.B. drei zu transportierenden VC-4 virtuellen Containern möglichst wenig Bytepositionen zum herkömmlichen Mapping geändert werden müssen. Der erste zu transportierende VC-4 wird in die Position des äquivalenten AU-4#2, der zweite VC-4 an die Position des äquivalenten AU-4#3 und der N-1-te VC-4 an die Position des äquivalenten AU-4#N gemapped. Da der POH#1 des VC-4#1, POH#2 des VC-4#2 und der POH#3 des VC-4#3 in einen Bereich fallen der als Fixed Stoff definiert ist, können diese POH#1..3 zusätzlich an einer Byte-Position des äquivalenten AU#1 transportiert werden. Die PTR (Pointer) der VC-4#1..3 werden ebenfalls in freien Bytepositionen des herkömmlichen AU#1 transportiert.

Mit dem erfindungsgemäßen Transportmodul wird ein Bündel von Übertragungskanälen generiert. Das Netzwerkmanagement konfiguriert, kontrolliert, etc. das Transportmodul als Ganzes. Es gibt einen direkten Zugriff auf das Transportmodul, aber nicht mehr auf die einzelnen Übertragungskanäle. Diese lassen sich erst nach einer Entbündelung umkonfigurieren, etc. Ein herkömmlicher ADM schaltet das Transportmodul als Ganzes durch. Ein neuartiger ADM könnte jedoch gemäß der Erfindung das Bündel terminieren und generieren, um einzelne Kanäle des Bündels zu droppen bzw. zu verschalten. Im PTR steht ein Pointerwert, der auf den Anfang des zugehörigen Containers zeigt. Es wird dadurch die Phasenlage der Payload an die Übertragungsfrequenz angepaßt. Bei einem terminierten Bündel wird jeder Kanal daraufhin untersucht, ob er zum nächsten Netzelement weitergeleitet oder aus dem Datenstrom entfernt werden soll. Der ADM ist geeignet, neue Transportmodule zu generieren durch Bündeln von Kanälen, die vorzugsweise zumindest zum übernächsten Netzelement gemeinsam weitergeleitet werden sollen. Der ADM beinhaltet dazu entsprechende Mittel, wie einen Prozessor mit geeigneter Software, einen Zwischenspeicher, etc. So können auch mehrere Kanäle, die unterschiedliche Zieladressen aufweisen, gebündelt werden, wenn sie zumindest eine gemeinsame Teilstrecke bis zu einem Verzweigungspunkt zurückzulegen haben. Diese Übertragungskanäle werden dann bis zum Verzweigungspunkt mittels eines erfindungsgemäßen Transportmoduls transportiert und anschließend beispielsweise individuell weitergeleitet.

Mittels des neuen Transportmoduls werden insbesondere die Betriebskosten für das Netzwerkmanagement reduziert. Netzelement die ganze Bündel schalten sind kostengünstiger als Netzelemente, die auch einzelne Kanäle des Bündels schalten. Das Transportmodul ist kompatibel mit existierenden SDH- und SONET-Standards, so dass es ohne Schwierigkeiten über ein bestehenden Netz übertragen werden kann.

Mittels des neuen Transportmoduls werden insbesondere die herkömmlichen Protectionverfahren effizienter angewandt, da anstatt von vielen einzelnen Protection Switches nur eine Protection Schaltung des Bündels durchgeführt und gemanagt werden muß.

Im folgenden wird die Erfindung anhand von Ausführungsbeispielen unter Zuhilfenahme von Figuren erläutert. Es zeigen:
- Fig. 1: ein Schaubild einer Bündelung von 15 VC-4,
- Fig. 2: ein Schaubild einer Entbündelung von 15 VC-4,
- Fig. 3: ein Schaubild einer Bündelung von 63 VC-4,
- Fig. 4: ein Schaubild einer Entbündelung von 63 VC-4,
- Fig. 5: logische Diagramme von 3 von 15 VC-4,
- Fig. 6: logische Diagramme von 3 von N-1 VC-4,
- Fig. 7: ein logisches Diagramm eines VC-4-16c Transportmoduls für 15xVC-4 (Mappingverfahren 1)

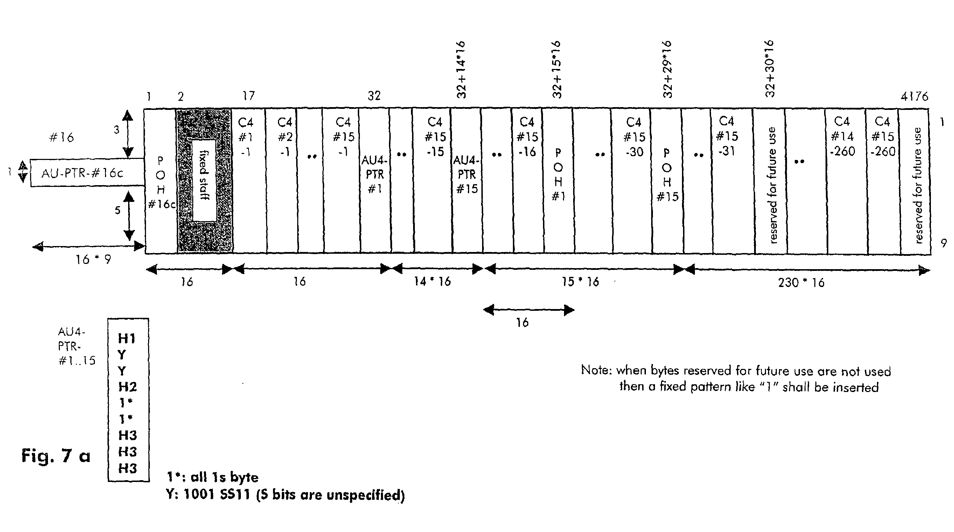

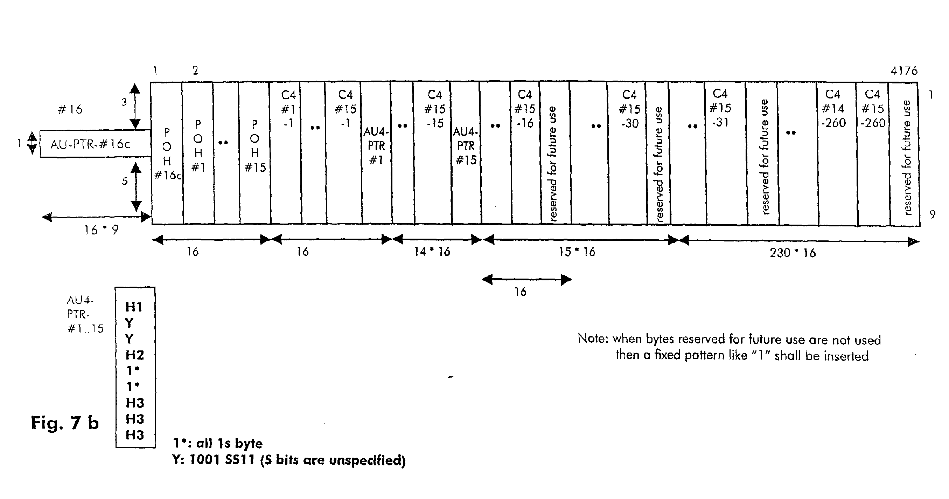

- Fig. 7 b: ein logisches Diagramm eines VC-4-16c Transportmoduls für 15xVC-4 (Mappingverfahren 2)

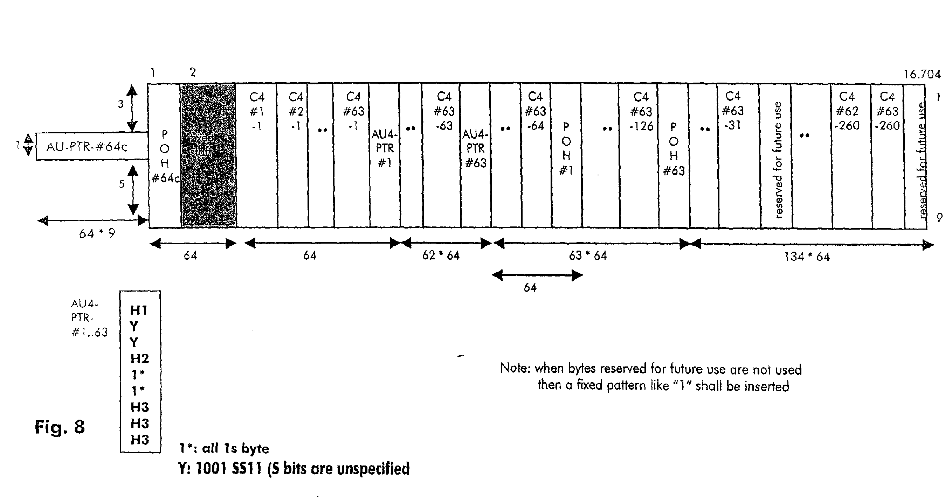

- Fig. 8: ein logisches Diagramm eines VC-4-64c Transportmoduls für 63xVC-4,

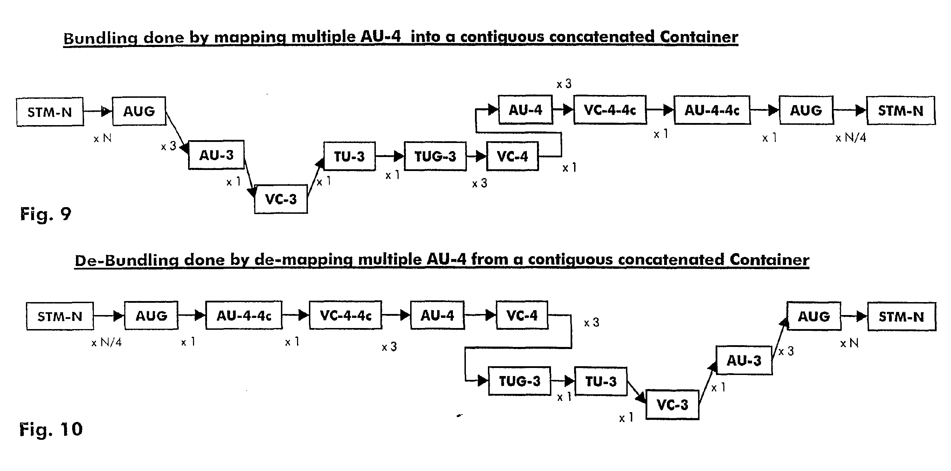

- Fig. 9: ein Schaubild einer Bündelung von 9 TU-3,
- Fig. 10: ein Schaubild einer Entbündelung von 9 TU-3,

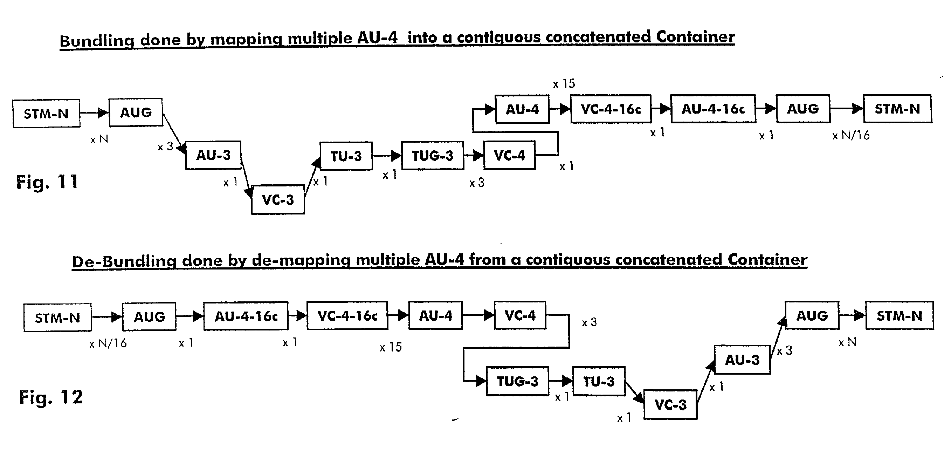

- Fig. 11: ein Schaubild einer Bündelung von 45 TU-3,
- Fig. 12: ein Schaubild einer Entbündelung von 45 TU-3,

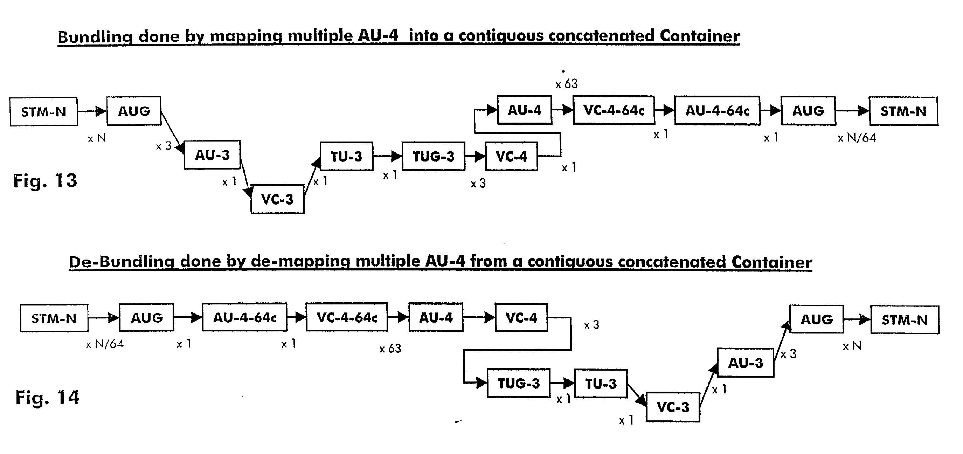

- Fig. 13: ein Schaubild einer Bündelung von 189 TU-3 ,
- Fig. 14: ein Schaubild einer Entbündelung von 189 TU-3 ,

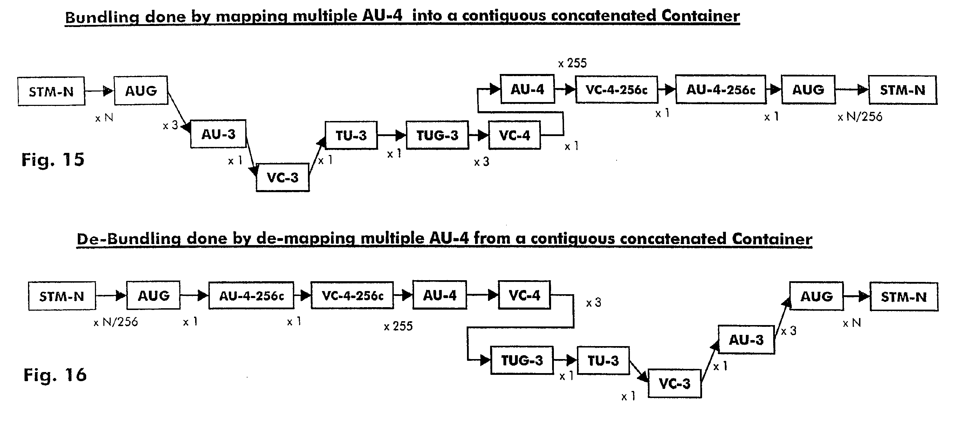

- Fig. 15: ein Schaubild einer Bündelung von 765 TU-3 ,
- Fig. 16: ein Schaubild einer Entbündelung von 765 TU-3 ,

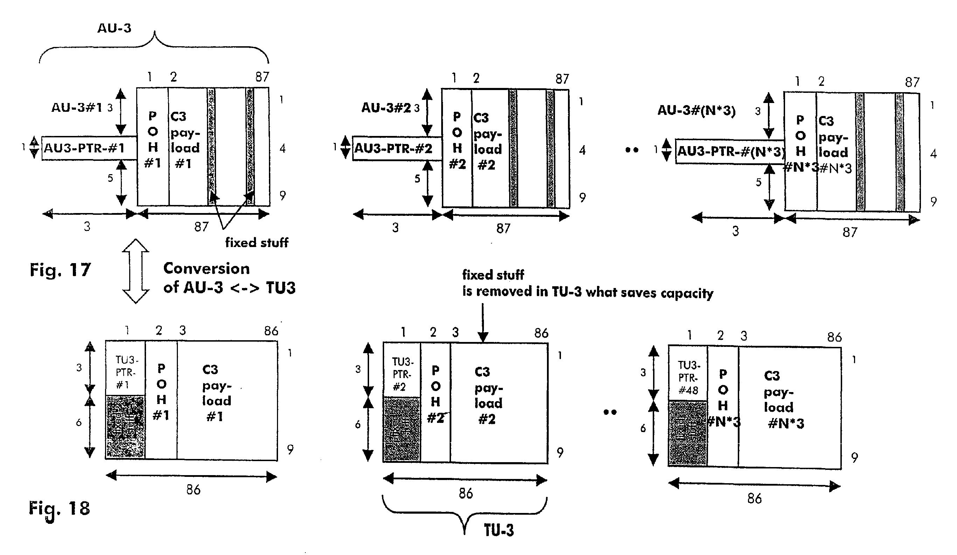

- Fig. 17: logische Diagramme von 3 von N*3 AU-3 ,
- Fig. 18: logische Diagramme von 3 von N*3 TU-3 ,

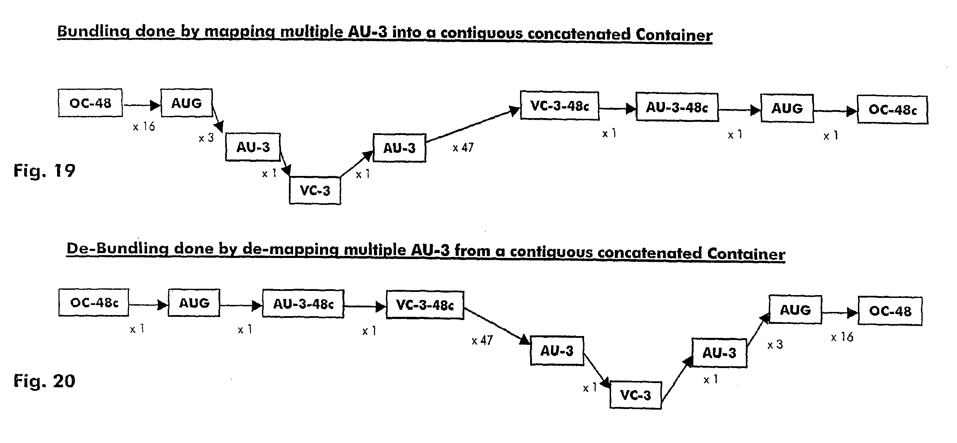

- Fig. 19: ein Schaubild einer Bündelung von 47 AU-3 ,
- Fig. 20: ein Schaubild einer Entbündelung von 47 AU-3,

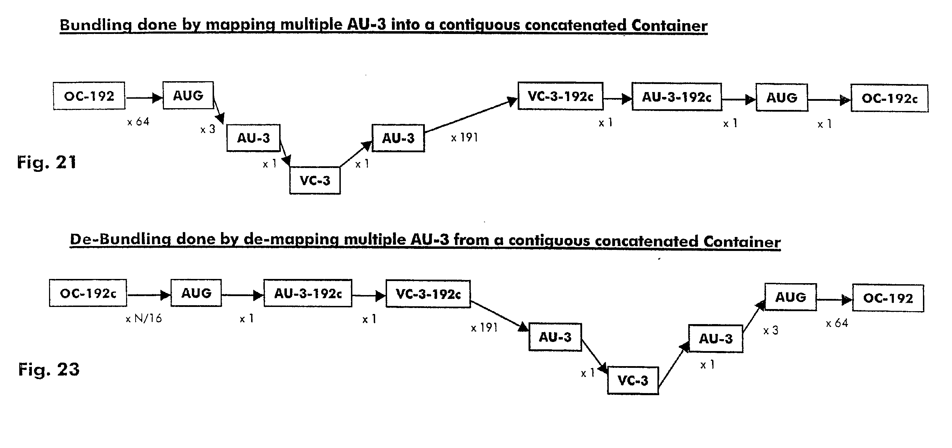

- Fig. 21: ein Schaubild einer Bündelung von 191 AU-3,

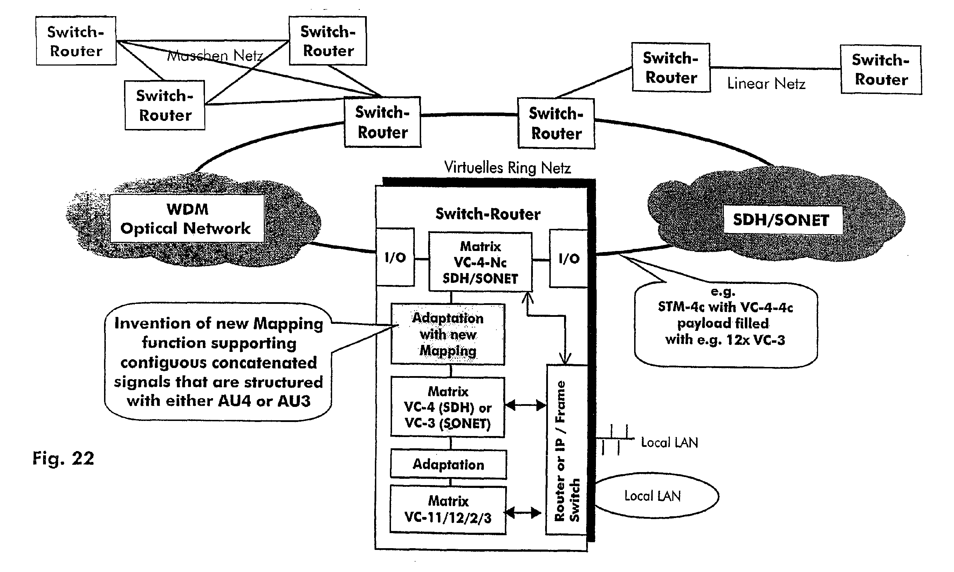

- Fig. 22: eine schematische Darstellung eines Übertragungssystems.

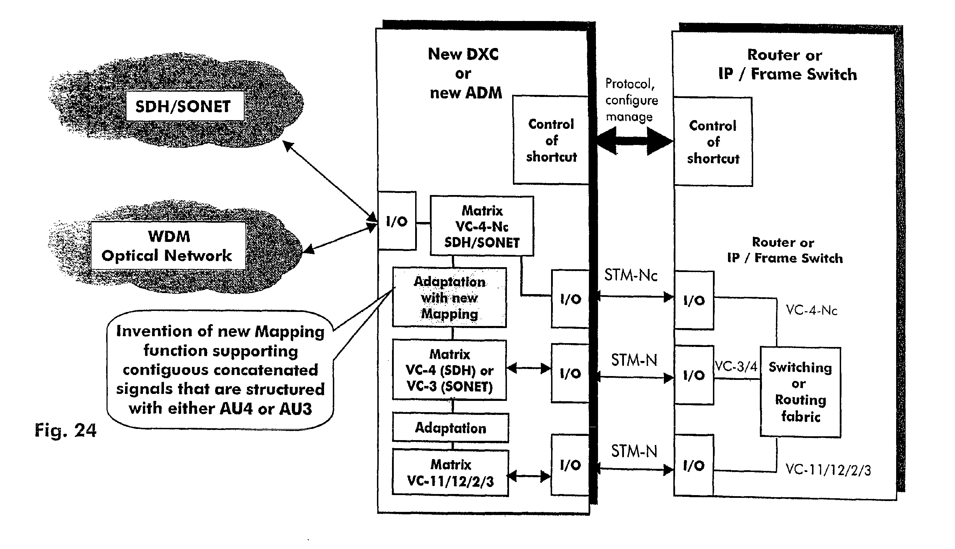

- Fig. 23: ein Schaubild einer Entbündelung von 191 AU-3,
- Fig. 24: eine schematische Darstellung eines Übertragungssystems

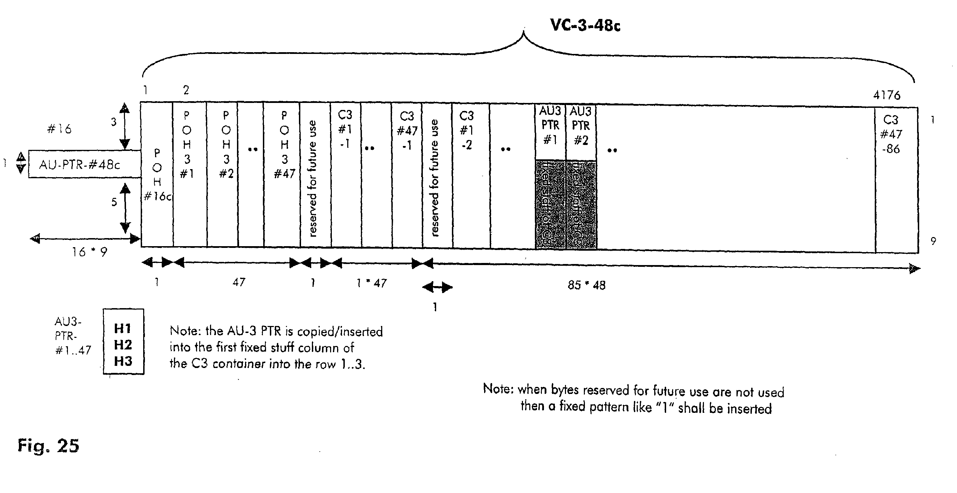

- Fig. 25: ein logisches Diagramm eines VC-3-48c Transportmoduls für 47xVC-4 (Mappingverfahren 1)

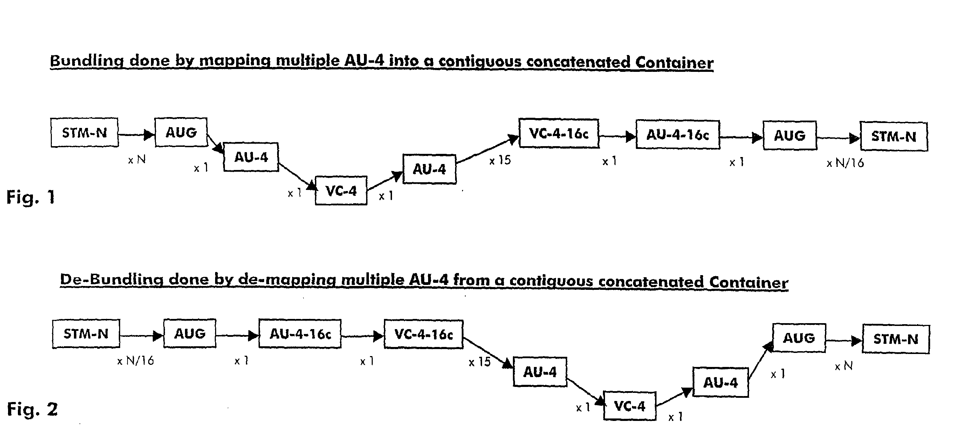

Die Ausführungsbeispiele werden nun anhand der Figuren 1 bis 25 erläutert.

Die Figuren 1 bis 18 beziehen sich auf SDH, die Fig. 19-21, 23, 25 auf SONET und die Fig. 22 und 24 auf SDH und SONET. Beim SDH werden Informationen in sogenannten synchronen Transportmodulen (STM) übertragen. Ein STM-1 Modul dient beispielsweise der Übertragung von 155 Mbit/s. Von den 155 Mbit/s sind ein Teil der sogenannte Overhead, in dem u.a. Synchronisationssignale, Steuerinformationen und sogenannte Pointer übertragen werden. Ein weiterer Teil ist die sogenannte Payload, in der u.a. Nutzinformationen übertragen werden. Ein STM-1-Rahmen hat eine byteorientierte Struktur mit 9 Zeilen und 270 Spalten und eine Dauer von 125 µs. Ein STM-4 Modul, das vier STM-1 Module beinhaltet, dient der Übertragung von 622 Mbit/s. Ein STM-16 Modul, das vier STM-4 Module beinhaltet, dient der Übertragung von 2,288 Gbit/s. Ein STM-N Modul, das N STM-1 Signale beinhaltet, dient der Übertragung von Nx155 Mbit/s. Den STM entsprechen die STS (Synchronous Transport Signal) im SONET. Die Bitrate eines STS-3 entspricht beispielsweise der eines STM-1, die eines STS-12 der eines STM-4 und die eines STS-48 der eines STM-16. Die Erfindung ist nicht auf SDH limitiert, sondern kann auch in SONET angewendet werden. Die Ausführungsbeispiele sind der Einfachheit halber weitgehend nur auf SDH bezogen. Es stellt fachmännisches Handeln dar, entsprechend analoge Anwendungen in SONET aufzufinden.

Jedes STM-1 Signal beinhaltet eine Administrative Unit Group (AUG), die wiederum entweder eine Administrative Unit AU-4 oder drei Administrative Units AU-3 beinhaltet. Jede AU-4 beinhaltet einen virtuellen Container VC-4, der wiederum einen Container C-4 beinhaltet. Im Container C-4 werden die eigentlichen Nutzinformationen übertragen. Die Übertragungsrate für einen C-4 beträgt 149 Mbit/s.

Jede AU-3 beinhaltet einen virtuellen Container VC-3, der wiederum entweder einen Container C-3 mit 49 Mbit/s enthält oder sieben Transportgruppen (Tributary Unit Group) TUG-2. Jede TUG-2 beinhaltet eine Transporteinheit (Tributary Unit) TU-2, drei Transporteinheiten TU-12 oder vier Transporteinheiten TU-11.

Jede TU-2 beinhaltet einen virtuellen Container VC-2, der wiederum einen Container C-2 enthält, der zur Übertragung von 6 Mbit/s dient.

Jede TU-12 beinhaltet einen virtuellen Container VC-12, der wiederum einen Container C-12 enthält, der zur Übertragung von 2 Mbit/s dient.

Jede TU-11 beinhaltet einen virtuellen Container VC-11, der wiederum einen Container C-11 enthält, der zur Übertragung von 1,5 Mbit/s dient.

Fig. 1 zeigt ein Schaubild einer Bündelung von 15 AU-4.
Es wird ein neues erfindungsgemäßes Transportmodul VC-4-16c gebildet, das 15 AU-4 Nutzsignale mit 15 VC-4 sowie zusätzlich 230*9 Bytes pro Rahmen für Zusatzinformationen, wie Synchronisationssignale, Steuersignale und/oder Datenkanäle oder sonstige Anwendungen beinhaltet. Der PTR des AU-4 zeigt auf das erste Byte des VC-4. Ein AU-4-16c wird durch die fest zusammenhängende Verkettung von 16 AU-4 gebildet.. Diese 16 AU-4 werden als Gruppe zum nächsten SDH Netzelement übertragen. Ende zu Ende wird das VC-4-16c Signal über das SDH/SONET Netz übertragen. Zur Weiterleitung über ADMs (Addl-Drop-Multiplexer) oder CCs (Cross-Connect) ist keine Einzelbetrachtung der einzelnen AU-4s bzw. VC-4 des VC-4-16c notwendig. Die VC-4-16c Gruppe wird als Ganzes weitergeleitet. Ein STM-N beinhaltet N AUGs, die wiederum jeweils eine AU-4 beinhalten. In einem STM-N stehen somit N AU-4 zur Verfügung. Ist für 15 der N VC-4 dieselbe Zwischen- oder End-Zieladresse vorgesehen, so können diese 15 VC-4 zusammengefasst werden. Dies erfolgt durch Bildung des VC-4-16c in den mit Hilfe einer Adaption- und Terminationsfunktion die 15 VC-4 gemapped werden. Da die einzelnen VC-4 virtuellen Container von unterschiedlichen Quellen mit unterschiedlichen Taktquellen herkommen können, wird der herkömmliche SDH/SONET Pointermechanismus verwendet, um die unterschiedlichen Taktunterschiede zu kompensieren. Deshalb wird der AU-4 bestehend aus VC-4 und PTR in den VC-4-16c gemapped.
Es ist dabei irrelevant, ob die zu transportierenden AU-4 Nutzkanäle miteinander verkettet sind, d.h. zusammengehörig sind, oder ob es sich um einzelne, voneinander unabhängige AU-4s handelt. Das Transportmodul VC-4-16c kann beispielsweise in einem STM-16 übertragen werden. Aus dem VC-4-16c wird in Fig. 1 ein entsprechendes AU-4-16c gebildet. Aus dem AU-4-16c wird ein AUG gebildet, das in ein STM-N eingefügt wird. Mittels eines STM-N können N/16 VC-4-16c übertragen werden. Ist beispielsweise N=64, so können vier VC-4-16c oder zwei VC-4-16c und 32 VC-4 oder ein VC-4-16c und 48 VC-4 übertragen werden.

Fig. 2 zeigt ein Schaubild einer Entbündelung von 15 VC-4 , die mittels eines VC-4-16c und einem STM-N übertragen wurden. Ist N=16, so wird aus dem STM-N ein AUG gewonnen, aus dem ein AU-4-16c gewonnen wird, aus dem wiederum ein VC-4-16c gewonnen wird. Das VC-4-16c beinhaltet die übertragenen 15 AU-4, die jetzt wieder einzeln zur Verfügung stehen. Anhand der Pointerposition des AU-4 kann z.B. der Anfang und das Ende des VC-4 bestimmt werden. Anschliessend kann der VC-4 beliebig verschaltet und gedropped werden. Das Aufbrechen des VC-4-16c erfolgt z.B. in einem ADM zu dem Zeitpunkt, zu dem ein VC-4-16c terminiert werden soll, da ein oder mehrere VC-4 verschaltet werden sollen.. Beispielsweise werden die ersten zehn VC-4 zu einer ersten Zieladresse weitergeleitet und die restlichen fünf VC-4 zu einer zweiten Zieladresse. Die zehn VC-4 können beispielsweise einzeln zur ersten Zieladresse übertragen werden oder in einem neuen VC-4-16c, der dann fünf unbelegte AU-4 beinhaltet. Sind im ADM weitere AU-4 vorhanden, die ebenfalls zur ersten Zieladresse übertragen werden sollen, so können die unbelegten AU-4 mit diesen AU-4 aufgefüllt werden. Ein neuer VC-4-16c wird beispielsweise immer dann gebildet, wenn mindestens zehn AU-4 mit derselben Zieladresse vorhanden sind oder auch erst nur dann, wenn mindestens fünfzehn AU-4 mit derselben Zieladresse vorhanden sind. Sind deutlich mehr als fünfzehn AU-4 mit der selben Zieladresse vorhanden können auch größere VC-4-Xc gebildet werden. Das X steht für die Anzahl der AU-4, das c für die sogenannte contiguous concatenation, also die Gruppenbildung. Anstelle von VC-4-Xc können auch VC-Y-Xc gebildet werden, wobei Y für die Größe der virtuellen Container steht, also z.B. Y=3 im Fall SONET und Y=4 im Fall SDH ETSI. Im folgenden werden weitere Beispiele erläutert.

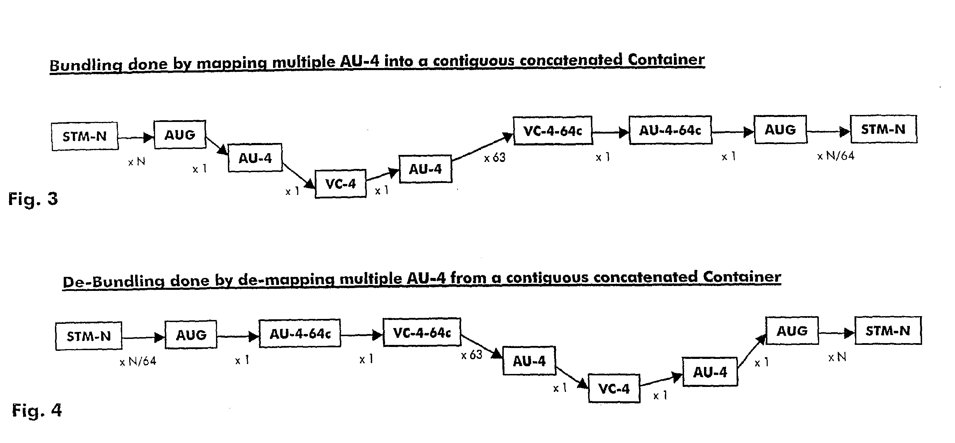

Fig. 3 zeigt ein Schaubild einer Bündelung von 63 AU-4 bzw. VC-4.
In einem STM-N sind N AU-4 enthalten. Ist N>63, so können 63 VC-4 zu einem VC-4-64c zusammengeschaltet werden. Es wird damit eine Gruppe von 64 fest zusammenhängenden, virtuellen Containern gebildet, die als Gruppe über ein SDH-Netz übertragen werden können. Der erste virtuelle Container hat dabei Klammerfunktion, d.h. er enthält Informationen über den Beginn und das Ende der Gruppe. Er beinhaltet z.B. auch Zusatzinformationen, wie Synchronisationssignale, Steuersignale und/oder Overhead und/oder Maintenance-Informafionen. Die Gruppe hat dieselbe Zieladresse, so dass sie auf einfache Art und Weise in jedem ADM und jedem CC durchgeschaltet werden kann ohne aufwendiges Netzwerkmanagement; insbesondere ohne die einzelnen AU-4 der Gruppe in jedem ADM oder jedem CC einzeln zu managen und weiterzuschalten.

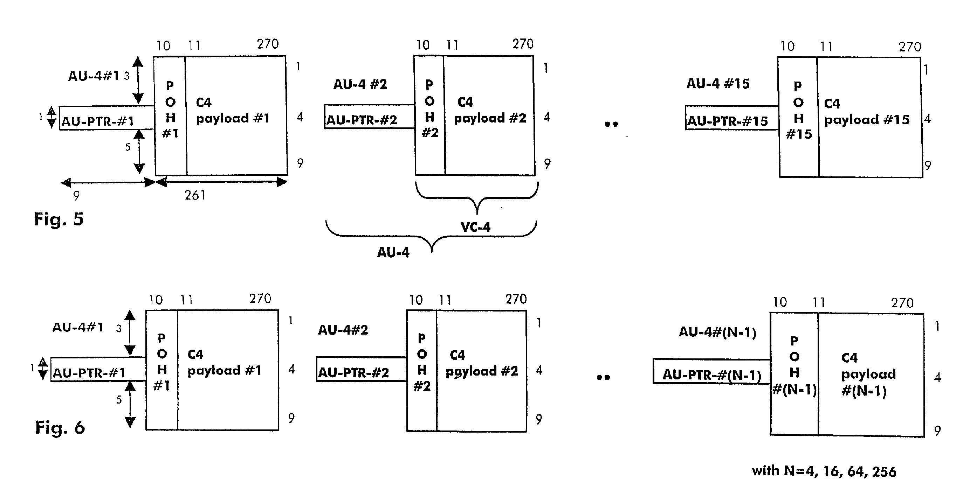

Fig. 4 zeigt ein Schaubild einer Entbündelung von 63 AU-4 bzw. VC-4, die in einem VC-4-64c über SDH übertragen wurden. Ist N=256, so werden aus dem STM-N z.B. zwei AU-4-64c und 127 AU-4 gewonnen. Nur das AU-4-64c ist in Fig. 4 dargestellt. Das AU-4-64c wird durch Auswertung und Verarbeitung der Pointer in ein VC-4-64c umgewandelt und anschließend in 63 AU-4 aufgebrochen, die wiederum in VC-4 verarbeitet werden. Damit ist die Gruppe wieder aufgelöst und die einzelnen VC-4 können fortan einzeln weiter übertragen werden oder beispielsweise in unterschiedlichen neu zu bildenden Gruppen weiter übertragen werden.

Fig. 5 zeigt logische Diagramme von 3 von 15 AU-4, die im Beispiel zu Fig. 1 zu einer Gruppe unter Verwendung eines VC-4-16c zusammengestellt werden sollen. Jedes AU-4 hat einen AU-PTR (AU-Pointer), einen POH (Path Overhead) und eine payload C4, in der die Nutzinformationen übertragen werden. Die Zahlenangaben beziehen sich auf die Anzahl bzw. die Nummer der Spalten bzw. Zeilen.

Fig. 6 zeigt logische Diagramme von 3 von N-1 AU-4. N kann beispielsweise 4, 16, 64 oder 256 sein. Es sind somit unterschiedlich große Gruppen bildbar. Es werden z.B. die folgenden Transportmodule gebildet VC-4-4c, VC-4-16c, VC-4-64c, VC-4-256c. Zur Übertragung von 258 AU-4 zur gleichen Zieladresse werden z.B. zwei Gruppen gebildet, eine mittels des Transportmoduls VC-4-256c und die andere mittels des Transportmoduls VC-4-4c. Die 258 AU-4 können aber auch unter Verwendung von vier VC-4-64c und einem VC-4-16c übertragen werden.

Fig. 7a zeigt ein logisches Diagramm eines erfindungsgemäßen VC-4-16c Transportmoduls für 15xAU-4. Die Zahlenangaben beziehen sich auf die Anzahl bzw. die Nummer der Spalten bzw. Zeilen. Durch die feste Zusammenschaltung von 16 AU-4 stehen nun 16x270=4320 Spalten zur Verfügung; die Anzahl der Zeilen bleibt mit neun unverändert. Die 4320 Spalten werden nun anstatt einer einfachen Aneinanderreihung von 16 AU-4 neu aufgeteilt. In den ersten neun*sechzehn Spalten in der vierten Zeile ist eine neuer AU-PTR eingefügt. Dieser AU-PTR stellt den Pointer für die gesamte Gruppe dar. In Spalte 1 ist ein neuer POH des VC-4-16c eingefügt. Dieser POH stellt den POH für die gesamte Gruppe dar. Dieser VC-4-16c wird dazu verwendet um die 15 AU-4 dargestellt in Fig. 5 transparent zu transportieren gemäß dem Schema dargestellt in Fig. 1 und 2. In den Spalten 32 , 32+K*16 mit K= 1..14 werden die AU-4-PTR der 15 zu transportierenden AU-4 eingemapped . Ein Au-4-PTR beinhaltet H1, Y, Y, H2, 1*, 1*, H3, H3, H3, wie gesondert dargestellt. In den Spalten 17 bis 4175 sind die C-4 Container der 15 AU-4 verschachtelt angeordnet. Der nicht ausgenutzte Platz, z.B. in den Spalten 32+L*16 mit L=30..259 wird für die Übertragung von Maintenance Bytes "Bytes for future use" verwendest. Die future use Bytes können für die Übertragung von Maintenance-Informationen genutzt werden, zur Fehlerkorrektur, etc.

In Fig. 7b werden die Pointer im Vergleich zu Fig. 7a im Fixed Stuff Bereich des VC-4-16c eingemapped. Dieses Mapping hat den Vorteil der großen Ähnlichkeit zu einem Mapping ohne Bündelung. Allerdings ist es möglich, dass eventuell bestimmtes herkömmliches SDH Equipment dieses Mapping nicht tolerieren.

Fig. 8 zeigt ein logisches Diagramm eines erfindungsgemäßen strukturierten VC-4-64c Transportmoduls für den transparenten Transport von 63xAU-4. Der AU-4-64c besteht aus einem AU-PTR für die Gruppe, einen POH für die Gruppe und dem VC-4-64c in dem 63 AU-4 transparent transportiert werden. Jeder der 63 AU-4 besteht aus einem AU-4-PTR und einem VC-4, der wiederum aus einem POH und einem zugehörigen C-4 Container besteht. Der VC-4-64c ist vergleichbar dem VC-4-16c aus Fig. 7 a bzw. 7 b aufgebaut und entsprechend an die höhere zu übertragende Datenrate angepasst.

Fig. 9 zeigt ein Schaubild einer Bündelung von 9 VC-3 bzw. 3 AU-4. Ein STM-N enthält Nx3 TU-3.. Ein VC-4 beinhaltet drei TUG-3. Ein TUG-3 beinhaltet ein TU-3. Ein TU-3 beinhaltet ein VC-3. Einen AU-3 kann man in einen TU-3 konvertieren. . Ist z.B. N=16, so stehen 15 AU-4 zur Verfügung, aus denen 48 TUG-3 gebildet werden können. Ein VC-4-4c kann drei AU-4 oder 9 TU-3 transparent transportieren. Eine Gruppe wird somit gebildet aus drei AU-4.

Fig. 10 zeigt ein Schaubild einer Entbündelung von 9 VC-3.. Entsprechend der Bündelung in Fig. 9 kann eine Entbündelung, d.h. eine Auflösung der Gruppe(n) durchgeführt werden. Die einzelnen VC-3 virtuellen Container können dann anschließend einzeln oder in neuen Gruppen weiter über SDH-Equipment übertragen werden.

Fig. 11 zeigt ein Schaubild einer Bündelung von 45 VC-3. Ein VC-4 enthält drei TUG-3. In einem VC-4-16c können somit 45 TUG-3 übertragen werden.. Die Bildung der Gruppe findet vergleichbar zu Fig. 9 staff.

Fig. 12 zeigt ein Schaubild einer Entbündelung von 45 VC-3.. Entsprechend der Bündelung in Fig. 11 kann eine Entbündelung, d.h. eine Auflösung der Gruppe(n) durchgeführt werden. Die einzelnen VC-3 Container können dann anschließend einzeln oder in neuen Gruppen weiter über SDH-Equipment übertragen werden.

Fig. 13 zeigt ein Schaubild einer Bündelung von 189 VC-3. Ein VC-4 enthält drei TUG-3. In einem VC-4-64c können somit 189 TUG-3 übertragen werden. . Die Bildung der Gruppe findet vergleichbar zu Fig. 9 statt.

Fig. 14 zeigt ein Schaubild einer Entbündelung von 189 VC-3. Entsprechend der Bündelung in Fig. 13 kann eine Entbündelung, d.h. eine Auflösung der Gruppe(n) durchgeführt werden. Die einzelnen VC-3 Container können dann anschließend einzeln oder in neuen Gruppen weiter über SDH-Equipment übertragen werden.

Fig. 15 zeigt ein Schaubild einer Bündelung von 765 VC-3 . Ein VC-4 enthält drei TUG-3. In einem VC-4-256c können somit 765 TUG-3 übertragen werden. 767 TUG-3 dienen der Übertragung von Informationen, eine TUG-3 dient als Klammer für die Gruppe. Die Bildung der Gruppe findet vergleichbar zu Fig. 9 statt.

Fig. 16 zeigt ein Schaubild einer Entbündelung von 765 VC-3. Entsprechend der Bündelung in Fig. 15 kann eine Entbündelung, d.h. eine Auflösung der Gruppe(n) durchgeführt werden. Die einzelnen VC-3 Container können dann anschließend einzeln oder in neuen Gruppen weiter über SDH-Equipment übertragen werden.

Fig. 17 zeigt logische Diagramme von 3 von Nx3 AU-3, die beispielsweise aus einem STM-N gewonnen werden. Jede AU-3 hat einen Pointer, den AU-PTR, einen Path Overhead, den POH und eine C3 payload, d.h. einen C3-Container, in dem die Nutzinformation übertragen wird.

Fig. 18 zeigt logische Diagramme von 3 von N*3 TU-3, die beispielsweise aus einem STM-N gewonnen werden. Jede TU-3 hat einen Pointer, den TU-3-PTR, einen Path Overhead, den POH und eine C3 payload, d.h. einen C3-Container, in dem die Nutzinformation übertragen wird.

Fig. 19 zeigt ein logisches Diagramm eines erfindungsgemäßen VC-3-48c der besonders geeignet ist zur Übertragung von 47 VC-3 in SONET-Netzen. In SONET-Netzen wird der VC-3 in einem AU-3 transportiert, weshalb dieses Mapping hier verwendet wird. Ein VC-3-48c entspricht einem VC-4-16c dargestellt in Fig. 7 a bzw. 7 b. Bei einem VC-3-48c sind 260*16*9+15*9 Bytes pro Rahmen verwendbar für den Transport von AU-3 dargestellt in Fig. 17 . Damit möglichst viele AU-3 Nutzsignale in einem VC-3-48c transportiert werden können, ist es denkbar, die zwei Fixed Stuff Reihen des VC-3 des AU-3 zu entfernen. Wenn man jedoch ein möglichst ähnliches Mapping des AU-3 wie bei herkömmlichen Transportmodulen haben möchte dann ist das Mapping dargestellt in Fig. 25 besonders vorteilhaft. Lediglich der AU-3 Pointer wird an einer anderen Position transportiert, nämlich in einem herkömmlichen Fixed Stuff Bereich des VC-3. Natürlich wäre es auch denkbar, den AU-3 Pointer in dem Bereich "reserverd for future use" zu transportieren.

Fig. 20 zeigt ein logisches Diagramm eines erfindungsgemäßen VC-3-48c Transportmoduls für den transparenten Transport von 47 VC-3 bzw AU-3. Vergleichbar zum VC-3-48c aus Fig. 19 wird das Demapping dargestellt. Vorteilhafterweise wird in einem SONET-Netz ein AU-3 direkt in die Payload (VC-3-48c) gemapped. Um möglichst wenig Bandbreite zu verbrauchen ist es sogar möglich, die Fixed Stuff Reihen des VC-3 zu entfernen. Im Ausführungsbeispiel dargestellt in Fig 24 wurden die Fixed Stuff Reihen nicht entfernt. Es ist jedoch auch möglich, sie zu entfernen. Es können mit diesem Mappingverfahren maximal 47 AU-3 transparent transportiert werden, die wiederum jeweils einen VC-3 enthalten, der beliebig strukturiert oder unstrukturiert sein kann.

Fig. 21 zeigt ein logisches Diagramm eines erfindungsgemäßen VC-3-192c Transportmoduls für 191 xAU-3. Vergleichbar zum VC-3-48c aus Fig. 19 werden in einem VC-3-192c 191 AU-3 übertragen
Fig. 23 zeigt ein logisches Diagramm eines erfindungsgemäßen VC-3-192c Transportmoduls für 191 xAU-3. Vergleichbar zum VC-3-48c aus Fig. 21 werden in einem VC-3-192c 191 AU-3 übertragen. Es wird dargestellt wie die VC-3 aus einem VC-3-192c ausgepackt werden, wenn die AU-3 direkt in den VC-3-192c eingemapped wurden.

Fig. 22 zeigt eine schematische Darstellung eines Übertragungssystems. Das Übertragungsnetz beinhaltet ein SDH- oder SONET-Netz und ein WDM/Optical Network und erfindungsgemäße Switch-Router. Die Switch-Router können in einer Masche, Linear oder Ringtopologie angeordnet sein. Die Switch-Router sind über Signalwege bzw. Pfade miteinander verbunden, die erfindungsgemäße strukturierte VC-4-Nc oder VC-3-Nc Signale transportieren können, wobei z.B. N=X gilt. Die Switch-Router können über Maschen-, Ring- oder Linear-Netze miteinander verbunden sein. In jedem Pfad ist ein Switch-Router angeordnet. Jeder Switch-Router beinhaltet Ein-Ausgabe-Schnittstellen I/O zu den Netzen sowie eine Matrix VC-4-Nc, eine Matrix VC-3 oder VC-4 und optional eine Matrix VC-11/12/2/3 und einen Router bzw. eine IP / Frame Switch. Die Matrizen dienen dazu, im Fall SDH aus dem empfangenen Datenstrom des einen SDH-Netzes diejenigen VCs, herauszufiltern, die zum anderen SDH-Netz weitergeleitet werden sollen und diejenigen, die zum Router bzw IP- / Frameswitch weitergeleitet werden sollen. Der Switch-Router hat somit die Funktion eines ADM und zusätzlich eine Routerfunktion durch den Router. Ein VC-4-4c Transportmodul wird in der Matrix empfangen. Stimmt die Zieladresse des Bündels mit dem Switch-Router überein, so wird die Gruppe aufgebrochen, d.h. es werden die einzelnen Gruppenmitglieder, z.B. 3 VC-3 identifiziert. Sechs der 9 VC-3 sind beispielsweise zur Weiterleitung ins nächste SDH-Netz bestimmt. Die Weiterleitung kann beispielsweise in sechs einzelnen TU-3 erfolgen oder in Form einer neu zu generierenden Gruppe, beispielsweise unter Hinzufügung von weiteren TU-3, die die gleiche Zieladresse haben und vom Router zur Verfügung gestellt werden. Drei der 9 VC-3 sind beispielsweise zur Weiterleitung zum Router bestimmt. Diese werden dem Router zugeführt, der sie entsprechend weiterleitet, z.B. in ein weiteres Übertragungsnetz, z.B. ein LAN (Local Area Network) oder ein WAN (Wide Area Network). Wenn die gesamte Gruppe zur Weiterleitung ins nächste SDH-Netz bestimmt ist, so erkennt die Matrix dies anhand der Information vom Netzmanagement und leitet die gesamte Gruppe z.B. den VC-4-4c entsprechend weiter ohne den Inhalt der Gruppe zu berücksichtigen. Da nur ein Bruchteil des Verkehrs vom Netz zum Router geschaltet wird, ist es möglich, jede einzelne Matrix entsprechend optimal zu skalieren. D.h. bei typischen Netzapplikationen wird etwa nur 20-50% des Verkehrs in die nächst kleinere Matrixstufe verschaltet, weshalb die VC-4-Nc Matrix bei einer besonders wirtschaftlichen Ausführung die größte Schaltkapazität gerechnet in STM-1-Äquivalenten besitzt. Dagegen ist die VC-4 Matrix viel kleiner dimensioniert. Da Matrizen mit einer kleineren Schaltungsgranularität teurer sind als solche mit einer größeren, ist der erfindungsmäßige Switch-Router besonders kostengünstig.

Die Funktion des Switch-Routers kann auch durch die Kombination eines ADMs bzw. CCs mit einem Router bereitgestellt werden. Dies ist in Fig. 24 dargestellt.

Es ist mit einem erfindungsgemäßen Switch-Router möglich, sogenannte Shortcuts effizient durchzuführen. Ein Shortcut verbindet zwei Router, wobei man versucht die Signale oder die Kanäle durch möglichst wenig SDH Matrizen zu schalten. Des weiteren ist es besonders vorteilhaft, auf möglichst grosser Granularität in der Matrix zu schalten. Man kann zur Steuerung der SDH/SONET Matrizen die Informationen und Protokolle des Routers nutzen, der die Verkehrsstatistik berechnen kann. Hierzu könnten z.B. das standardisierte MPLS (Multiprotocol Label Switching) Protokoll verwendet werden.

Fig. 25 zeigt das genaue Byte Mapping eines erfindungsgemäßen VC-3-48c mit einer Nutzlast von 47 xAU-3. Vergleichbar zum VC-3-16c aus Fig. 7 a bzw. b werden in einem VC-3-48c 47 AU-3 übertragen.

## Patentansprüche

1. VC-Y-Xc oder AU-Y-Xc Transportmodul für SDH oder SONET zur Bildung einer Gruppe von X aufeinanderfolgenden, fest verketteten, virtuellen Containern, mit einem PTR für die Gruppe, einem POH für die Gruppe und mindestens X-1 individuellen PTR-, POH- und Payload-Segmenten zum transparenten Übertragen von Nutzinformationen, wobei X eine natürliche Zahl größer 1 ist und Y gleich 3 oder 4 oder eine natürliche Zahl größer 1 ist.

2. VC-Y-Xc Transportmodul nach Anspruch 1, **dadurch gekennzeichnet, dass** das Transportmodul ein AU-PTR und ein VC-Y-Xc-POH für die Gruppe beinhaltet sowie entsprechend der Anzahl der mit der Gruppe zu übertragenden Nutzkanäle auch entsprechend AU-3 oder AU-4 PTR, POH und Container beinhaltet.

3. VC-Y-Xc Transportmodul nach Anspruch 1, **dadurch gekennzeichnet, dass** Y=4 gilt und X=4 und das Transportmodul zur Übertragung von 3 AU-4 oder 9 TU-3 dient.

4. VC-Y-Xc Transportmodul nach Anspruch 1, **dadurch gekennzeichnet, dass** Y=4 gilt und X=16 und das Transportmodul zur Übertragung von 15 AU-4 oder 45 TU-3 dient.

5. VC-Y-Xc Transportmodul nach Anspruch 1, **dadurch gekennzeichnet, dass** Y=4 gilt und X=64 und das Transportmodul zur Übertragung von 63 AU-4 oder 189 TU-3 dient.

6. VC-Y-Xc Transportmodul nach Anspruch 1, **dadurch gekennzeichnet, dass** Y=4 gilt und X=256 und das Transportmodul zur Übertragung von 255 AU-4 oder 765 TU-3 dient.

7. VC-Y-Xc Transportmodul nach Anspruch 1, **dadurch gekennzeichnet, dass** Y=3 gilt und X=N mit N=12, 48, 192 oder 768 und das Transportmodul zur Übertragung von N-1 AU-3 dient.

8. VC-Y-Xc Transportmodul nach Anspruch 1, **dadurch gekennzeichnet, dass** Y=4 gilt und X=N mit N=16, 64 oder 256 und das Transportmodul zur Übertragung von mindestens (N/Z)-1 AU-4-Zc mif Z=4, 16 oder 64 dient.

9. VC-Y-Xc Transportmodul nach Anspruch 1, **dadurch gekennzeichnet, dass** Y=3 gilt und X=N mit N=48, 192 oder 768 und das Transportmodul zur Übertragung von mindestens (N/Z)-1 AU-3-Zc mif Z=3, 12, 48 oder 192 dient.

10. VC-Y-Xc Transportmodul nach Anspruch 1, **dadurch gekennzeichnet, dass** die verwendete Multiplexstruktur des VC-Y-Xc im sogenannten C2 Byte des POH der Gruppe signalisiert wird, womit eine reine AU-4 oder AU-3 oder gemischte AU-4 und AU-3 Nutzlast signalisiert wird.

11. Vorrichtung zur Bündelung von Übertragungskanälen in SDH oder SONET, die geeignet ist ein Transportmodul nach Anspruch 1 zu generieren.

12. Vorrichtung zur Entbündelung von Übertragungskanälen in SDH oder SONET, die geeignet ist ein Transportmodul nach Anspruch 1 aufzuteilen.

13. Switch-Router für SDH oder SONET, beinhaltend eine erste Matrix für VC-Y-Xc und eine zweite Matrix für VC-4 oder VC-3 , ein Adaptionsmodul, das zwischen die erste und die zweite Matrix geschaltet ist, und einen Router oder einen IP-, ATM- oder Frameswitch, der mit der ersten und zweiten Matrix verbunden ist, wobei das Adaptionsmodul geeignet ist, ein Transportmodul nach Anspruch 1 aufzuteilen und/oder ein solches zu generieren.

14. Netzelement eines SDH- oder SONET-Netzes, beinhaltend eine erste Matrix für VC-Y-Xc, eine zweite Matrix für VC-4 oder VC-3 und ein Adaptionsmodul, das zwischen die erste und die zweite Matrix gechaltet ist und das geeignet ist, ein Transportmodul nach Anspruch 1 aufzuteilen und ein solches zu generieren.

15. Netzelement nach Anspruch 10, **dadurch gekennzeichnet, dass** es eine Add-Drop-Multiplexer-Funktion oder eine Cross-Connect-Funktion beinhaltet.

16. Verfahren zum Übertragen von virtuellen Containern von SDH- oder SONET-Signalen, bei dem eine Gruppe von AU-3 oder AU-4 in einem Transportmodul nach Anspruch 1 mit einem AU-PTR und einem AU-POH für die Gruppe übertragen wird.

17. VC-Y-Xc Transportmodul nach Anspruch 1, **dadurch gekennzeichnet, dass** die Payload-Segmente im Bündel transparent zu übertragende Nutzkanäle beinhaltend eine Mischung von AU-4 und AU-3 beinhalten.

18. VC-Y-Xc Transportmodul nach Anspruch 1, **dadurch gekennzeichnet, dass** die Payload-Segmente im Bündel transparent zu übertragende Nutzkanäle beinhalten, die verschiedene Ziel- und/oder verschiedene Quelladressen haben, weshalb die Pointer der virtuellen Nutzkanäle mitübertragen werden, um Frequenzabweichungen auszugleichen.

19. VC-Y-Xc Transportmodul nach Anspruch 1, **dadurch gekennzeichnet, dass** die Payload-Segmente im Bündel transparent zu übertragende Nutzkanäle beinhalten, die alle die gleichen Ziel- und Quelladressen haben, wobei die zu übertragenden TU-3 oder TU-2 oder TU-12 oder TU-11 direkt in den VC-Y-Xc eingemapped werden ohne eine dazwischenliegende Schaltungsebene VC-4 und AU-4

20. VC-Y-Xc Transportmodul nach Anspruch 1, **dadurch gekennzeichnet, dass** die Payload-Segmente im Bündel transparent zu übertragende Nutzkanäle beinhalten, die alle die gleichen Ziel- und Quelladressen haben, wobei die zu übertragenden TU-2 oder TU-12 oder TU-11 direkt in den VC-Y-Xc eingemapped werden ohne eine dazwischenliegende Schaltungsebene VC-3 und AU-3
